# EUROPEAN PATENT SPECIFICATION

(11) **EP 2 017 166 B1**
(45) Date of publication and mention of the grant of the patent: **22.02.2012**
(21) Application number: 08252444.8
(22) Date of filing: 17.07.2008
(51) Int. Cl.: B62J 6/00

(54) **Straddle type vehicle**
Grätschsitz-Fahrzeug
Véhicule de type à selle

(30) Priority: 19.07.2007 JP 2007188741; 13.06.2008 JP 2008155738
(43) Date of publication of application: 21.01.2009
(73) Proprietor: Yamaha Hatsudoki Kabushiki Kaisha, Shizuoka-ken 438-8501 (JP)
(72) Inventor: Ohzono, Gen, Iwata-shi, Shizuoka-ken 438-8501 (JP)
(74) Representative: Moreland, David

(56) References cited:
- EP-A- 1 362 775
- EP-A- 1 495 953
- FR-A- 2 476 582

## Description

### FIELD OF THE INVENTION

The present invention relates to a straddle type vehicle, and more particularly to a straddle type vehicle including a flasher lamp.

### BACKGROUND TO THE INVENTION

Flasher lamps (winkers, blinkers, indicators or the like) as flashing lights for providing a sign before a right or a left turn are generally installed in a straddle type vehicle. It is well known with straddle type vehicles that a cover member on a front part of handlebars (for example, a cowling and a front cover) and flasher lamps are unitarily formed in the case that the flasher lamps are installed in a front part of the vehicle. JP-A-2005-41476, for example, discloses this kind of a flasher lamp in which the cowling is unitarily formed.

In the straddle type vehicle disclosed in JP-A-2005-041476, accordingly to the preamble of claim 1, a headlamp is disposed in a general center in the vehicle width direction of a body cowl disposed in a front part of the vehicle. A pair of right and left flasher lamps are disposed in positions above and distant from the headlamp.

However, the straddle type vehicle in JP-A-2005-41476 has a construction in which the pair of right and left flasher lamps protrude outside of the body cowl, and thus the flasher lamps may contact with a road surface, etc. and be damaged in the case that the straddle type vehicle falls down to the ground for any reason. Damage to the flasher lamps may be prevented by not disposing the flasher lamps in parts that may first contact with the ground when the vehicle falls. However, flexibility in arrangement of the flasher lamps (further, flexibility in vehicle design) is largely restrained. Therefore, a construction is required in which damage to the flasher lamps in a fall of the vehicle can be prevented without restraining flexibility in vehicle design.

The present invention is made in consideration of such a problem, and it is a principal object of this invention to provide a straddle type vehicle which can effectively protect flasher lamps from damage when the vehicle falls down to the ground.

### SUMMARY OF THE INVENTION

A straddle type vehicle in accordance with the present invention is a straddle type vehicle including: a cowling; and a flasher lamp protruding on a side surface of the cowling, in which first end of the flasher lamp is pivotally supported by a bearing provided on an inner surface of the cowling in a rotatable manner, on the other hand, the second end of the flasher lamp is locked on a mounting part provided on the inner surface of the cowling by a locking member, and the locking member has a construction such that engagement is unlocked when a prescribed load is applied from an outside of the flasher lamp.

The locking member may be constructed in such a manner that a fastening member for fastening the flasher lamp and the cowling together can be inserted in the second end of the flasher lamp and the mounting part of the cowling. An insertion hole in which the fastening member is inserted may be formed on the mounting part of the cowling. The insertion hole may be formed with a U-shaped wall surface opening toward a rotational direction of the flasher lamp.

The locking member may be constructed in such a manner that a fastening member for fastening the flasher lamp and the cowling together can be inserted in the second end of the flasher lamp and the mounting part of the cowling. A part having an insertion hole in which the fastening member is inserted may be provided at the second end of the flasher lamp. The part having the insertion hole may be constructed with an elastic material.

The flasher lamp may be formed to extend in a fore-and-aft direction of a vehicle. The first end of the flasher lamp pivotally supported by the bearing may define a front end of the flasher lamp.

The second end of the flasher lamp may be locked on two mounting parts provided on the inner surface of the flasher lamp by locking members different from each other. A first locking member between the different locking members may be constructed in such a manner that a fastening member for fastening the flasher lamp and the cowling together can be inserted in the second end of the flasher lamp and the mounting part of the cowling. An insertion hole in which the fastening member is inserted may be formed on the mounting part of the cowling. The insertion hole may be formed in a U-shape opening toward a rotational direction of the flasher lamp.

A second locking member between the different locking members may be constructed in such a manner that the fastening member for fastening the flasher lamp and the cowling together can be inserted in the second end of the flasher lamp and the mounting part of the cowling. A part having an insertion hole in which the fastening member is inserted may be provided at the second end of the flasher lamp. The part having the insertion hole may be constructed with an elastic material.

The flasher lamp may have a part protruding more outward than an outermost part of the cowling.

According to an aspect of the present invention there is provided a straddle type vehicle comprising:
a cowling; and
a flasher lamp adapted to protrude from a surface of the cowling, a first end of the flasher lamp being pivotally supported by a bearing provided on an inner surface of the cowling in a rotatable manner, and a second end of the flasher lamp being locked on a mounting part provided on the inner surface of the cowling by a locking member,
wherein the locking member has a construction such that the engagement is unlocked when a prescribed or predetermined load is applied from an outside of the flasher lamp.

The locking member may comprise a fastening member.

The fastening member may be adapted to be inserted in the second end of the flasher lamp and the mounting part of the cowling to fasten said flasher lamp and cowling together.

The mounting part may define an insertion hole adapted to receive the fastening member.

The insertion hole may be formed with a U-shaped wall surface opening toward a rotational direction of the flasher lamp.

The second end of the flasher lamp may comprise a part having an insertion hole adapted to receive the fastening member.

The part of the second end of the flasher lamp having the insertion hole may comprise an elastic material.

The flasher lamp may be formed to extend in a fore-and-aft direction of a vehicle, and the first end of the flasher lamp pivotally supported by the bearing defines a front end of the flasher lamp.

The second end of the flasher lamp may be locked on two mounting parts provided on the inner surface of the flasher lamp by locking members different from each other.

A first locking member between the different locking members may be constructed in such a manner that a fastening member for fastening the flasher lamp and the cowling together can be inserted in the second end of the flasher lamp and the mounting part of the cowling.

An insertion hole in which the fastening member is inserted may be formed on the mounting part of the cowling.

The insertion hole may define a U-shape opening. The opening may open toward a rotational direction of the flasher lamp.

A second locking member between the different locking members may be constructed in such a manner that the fastening member for fastening the flasher lamp and the cowling together can be inserted in the second end of the flasher lamp and the mounting part of the cowling. A part having an insertion hole in which the fastening member is inserted may be provided at the second end of the flasher lamp. The part having the insertion hole may comprise or be constructed with an elastic material.

The flasher lamp may comprises a part adapted to protrude outwardly beyond an outermost part of the cowling.

In accordance with the straddle type vehicle of the present invention, first end of the flasher lamp is pivotally supported by the bearing provided on the inner surface of the cowling in a rotatable manner. Meanwhile, the second end of the flasher lamp is locked on the mounting part provided on the inner surface of the cowling by the locking member. Further, the locking member has the construction in which engagement is unlocked when a prescribed load is applied from the outside of the flasher lamp. Therefore, the engagement on the second end of the flasher lamp is unlocked and the flasher lamp can be retracted into the inside of the cowling in the case that the flasher lamp contacts with the road surface when the vehicle falls down to the ground. Thereby, an impact in a fall of the vehicle can be reduced, and damage to the flasher lamp can be prevented.

### BRIEF DESCRIPTION OF THE DRAWINGS

These and other aspects of the present invention will now be described, by way of example only, with reference to the accompanying drawings, in which:
FIG. 1 is an external side view schematically showing a profile of a straddle vehicle 100 according to an embodiment of the present invention;
FIG. 2 is a schematic block diagram for schematically describing a construction for mounting a flasher lamp 10 on the motorcycle of FIG. 1;
FIG. 3 is an external rear view of a part in which the flasher lamp 10 is mounted as seen from an inside (rear side) of a lower cowling 20b;
FIG. 4 (a) is an enlarged external view showing a vicinity of a first end 12 in FIG. 3 on larger scale;
FIG. 4 (b) is a cross section taken along line IVB-IVB in FIG. 4(a);
FIG. 5 (a) is an enlarged external view showing a vicinity of an upper second end 14a in FIG. 3 on larger scale;
FIG. 5(b) is a cross section taken along line VB-VB in FIG. 5(a);
FIG. 6 (a) is an enlarged external view showing a vicinity of a lower second end 14b in FIG. 3 on larger scale;
FIG. 6 (b) is a cross section taken along line VIB-VIB in FIG. 5(a);
FIG. 7 is a drawing showing a modification of the embodiment;
FIG. 8 is an enlarged view of essential parts showing a vicinity of a left side of a cowling 20 as seen from the front of a vehicle; and
FIG. 9 is an enlarged view of essential parts showing a vicinity of the cowling 20 as seen from the left side of the vehicle.

### DETAILED DESCRIPTION OF THE DRAWINGS

An embodiment according to the present invention will be described hereinafter with reference to drawings. Descriptions will be made while giving the same reference numerals and symbols to members and parts having the same effects in the following drawings. The present invention is not limited to the following embodiment.

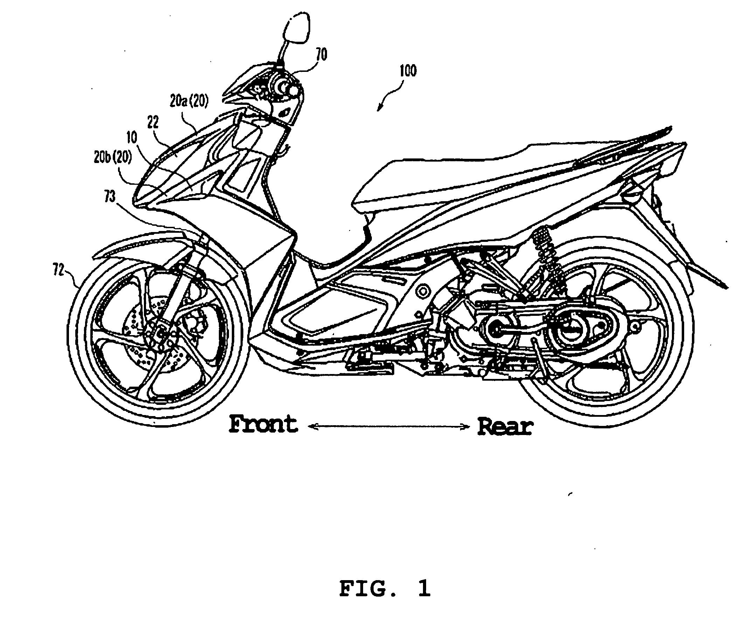

A straddle type vehicle 100 according to the embodiment of the present invention will be described with reference to FIG. 1. FIG. 1 is an external side view schematically showing a profile of the straddle type vehicle 100.

The straddle type vehicle 100 (also referred to as "vehicle" hereinafter) according to this embodiment is a so-called underbone type motorcycle. The straddle type vehicle 100 is constructed with a front wheel 72 being rotatable while being linked with handlebars 70 and a cowling 20 disposed in the lower front of the handlebars 70. A member 73 extending forwardly downward from the handlebars 70 is a front fork 73 for absorbing impacts from a road surface, and supports the front wheel 72 disposed in the most front part of the vehicle. The front wheel 72 is steered by the handlebars 70 mounted on an upper end of the front fork 73.

The cowling 20 is disposed in the lower front of the handlebars 70. The cowling 20 is a cover member (also referred to as "front cover") and is mounted for covering a front side of the vehicle. Flasher lamps 10 are mounted on the cowling 20. The flasher lamp 10 has a function as a turn signal lamp. The flasher lamp may also be referred to as a "blinker", "winker", "indicator" or the like. The flasher lamp 10 in this embodiment protrudes on a side surface of the cowling 20.

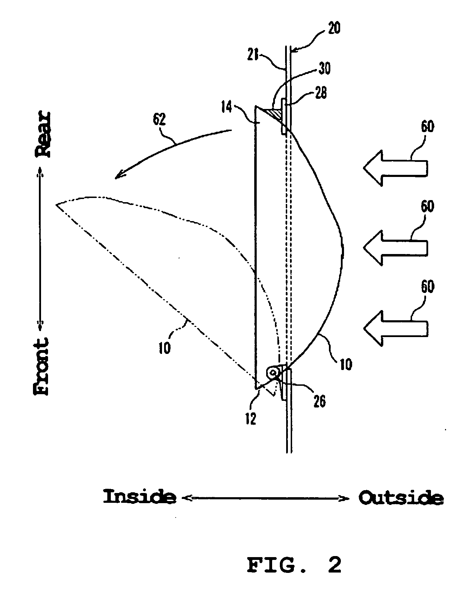

A construction for mounting the flasher lamp 10 will now be described with reference to FIG.2. FIG. 2 is a schematic block diagram for schematically describing the construction for mounting the flasher lamp 10 according to this embodiment.

The flasher lamp 10 according to this embodiment is a member extending in the fore-and-aft direction of the vehicle, and is mounted on an inner surface 21 of the cowling 20 to protrude outside from the side surface of the cowling 20. In this embodiment, each of a first end 12 and a second end 14 in the fore-and-aft direction of the vehicle is mounted on the inner surface 21 of the cowling 20.

The first end 12 of the flasher lamp 10 (i.e., a front end of the flasher lamp in this embodiment) is pivotally supported by a bearing or pivot assembly 26 provided on the inner surface 21 of the cowling 20 in a rotatable manner. That is, the flasher lamp 10 is rotatable in a direction of the arrow "62" with first end 12 supported by the bearing 26 being a fulcrum. A rotational direction of the flasher lamp 10 (the direction of the arrow "62") corresponds with a direction (the direction of the arrows "60") of a load applied from the outside to the flasher lamp 10, for example when the vehicle falls down to the ground. It is only required that the bearing 26 have a function for supporting first end 12 of the flasher lamp and be able to rotate in the direction of the arrow "62". For example, a hinge structure can be adopted as such a bearing structure.

On the other hand, a second end 14 of the flasher lamp 10 is locked on mounting parts 28 provided on the inner surface 21 of the cowling 20 by a locking member 30. That is, the second end 14 is fixed by the locking member 30, and thereby the flasher lamp 10 is restrained from rotating in the direction of the arrow "62". A screw-fastening mechanism can be adopted as such a locking member 30. In other words, the second end 14 of the flasher lamp is fastened and fixed to the mounting parts 28 of the cowling, and thereby the second end 14 of the flasher lamp and the mounting parts 28 are locked together in a manner such that a prescribed or predetermined fastening force (for example, approximately 1.0 N·m) acts in a direction of the fastening.

The locking member 30 has a construction such that engagement is unlocked when a prescribed load is applied from the outside of the flasher lamp 10. That is, the locking member 30 is constructed not to sustain engagement after a prescribed load is applied, for example due to an impact in a fall of the vehicle. As a result, the flasher lamp 10 locked on the inner surface of the cowling 20 again becomes rotatable in a direction of the arrow "62".

In accordance with the straddle type vehicle 100 of this embodiment, first end 12 of the flasher lamp 10 is pivotally supported by the bearing 12 provided on the inner surface 21 of the cowling 20 in a rotatable manner. On the other hand, the second end 14 of the flasher lamp 10 is locked on the mounting parts 28 provided on the inner surface 21 of the cowling 20 by the locking member 30. Further, the locking member 30 has a construction such that engagement is unlocked when a prescribed load is applied from an outside of the flasher lamp 10. Therefore, the flasher lamp 10 can be retracted in the inward direction of the vehicle (the direction of the arrow "60") in the case that the flasher lamp 10 contacts with the road surface when the vehicle falls to the ground. Accordingly, impact caused by the vehicle falling can be reduced, and damage to the flasher lamp 10 can be prevented. The vehicle can travel again if the rotated flasher lamp 10 is pushed out from the inside after the fall.

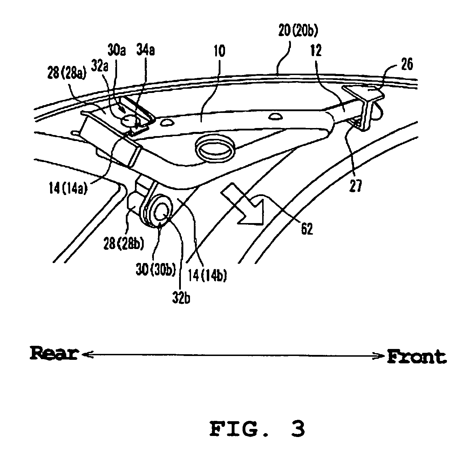

The construction for mounting the flasher lamp 10 according to this embodiment will be described hereinafter in detail with reference to FIGs. 3 through 6. FIG. 3 is an external rear view of a part on which the flasher lamp 10 is mounted as seen from an inside (rear side) of the cowling 20.

As shown in FIG. 3, the flasher lamp 10 according to this embodiment is formed to extend in the fore-and-aft direction of the vehicle. First end 12 of the flasher lamp 10 supported by the bearing 26 is the front end of the flasher lamp 10. In this construction, a rotational axis of the flasher lamp 10 is positioned in a front part of the flasher lamp, and a rear part of the flasher lamp 10 can be pulled off with the rotational axis being a fulcrum. Therefore, an impact in a fall can be reduced without resisting against a movement of the vehicle in the traveling direction. Accordingly, an effect of protecting the flasher lamp 10 from damage can be further improved.

The flasher lamp 10 according to this embodiment is generally triangular as viewed from the inside (rear side) of the cowling 20. The second end 14 of the flasher lamp 10 is locked on two mounting parts (28a and 28b) provided on an inner surface of a cowling 20. That is, the second end 14 of the flasher lamp 10 is constructed with an upper second end 14a positioned above and a lower second end 14b positioned below, and is fixed to each of the mounting parts (28a and 28b) by locking members (locking member 30a or 30b) with a separate construction.

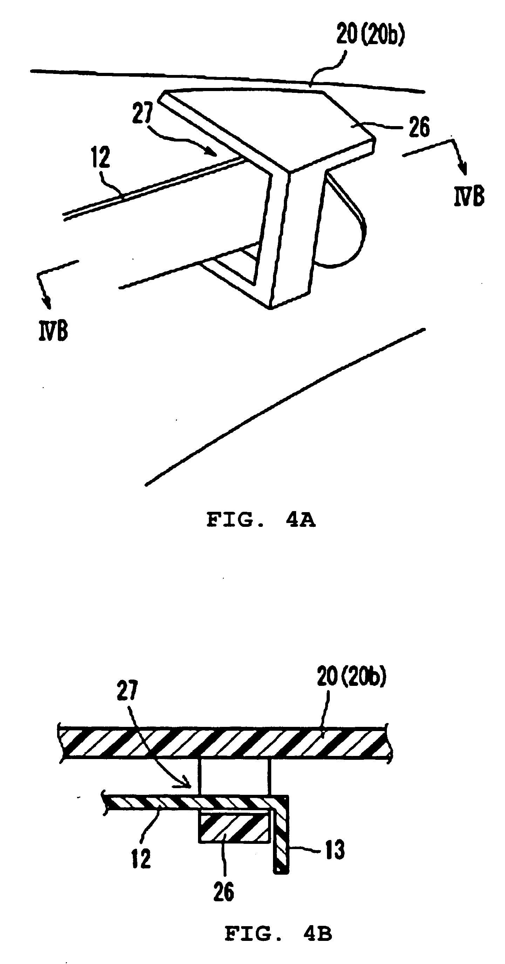

A construction for pivotally supporting first end 12 of the flasher lamp 10 is shown in FIGs. 4. FIG. 4(a) is an enlarged view showing a vicinity of the first end 12 in FIG. 3. FIG. 4 (b) shows a cross section taken along line IVB-IVB in FIG. 4(a).

The bearing 26 of this embodiment is a member protruding in the inward direction of the vehicle. A hole 27 is formed in a position in the bearing 26 in which first end 12 of the flasher lamp 10 can be inserted along the fore-and-aft direction of the vehicle. A tip of first end 12 of the flasher lamp 10 is bent. A pawl 13 is formed at the bent tip. The tip of first end 12 is inserted in the hole 27 of the bearing 26, and the pawl 13 is engaged in an outer periphery of the hole 27. Thereby, first end 12 of the flasher lamp 10 is pivotally supported rotatably in the inward direction of the vehicle (the direction of the arrow "62").

A construction for locking the second end 14 of the flasher lamp 10, in particular, a mechanism for unlocking the engagement will now be described.

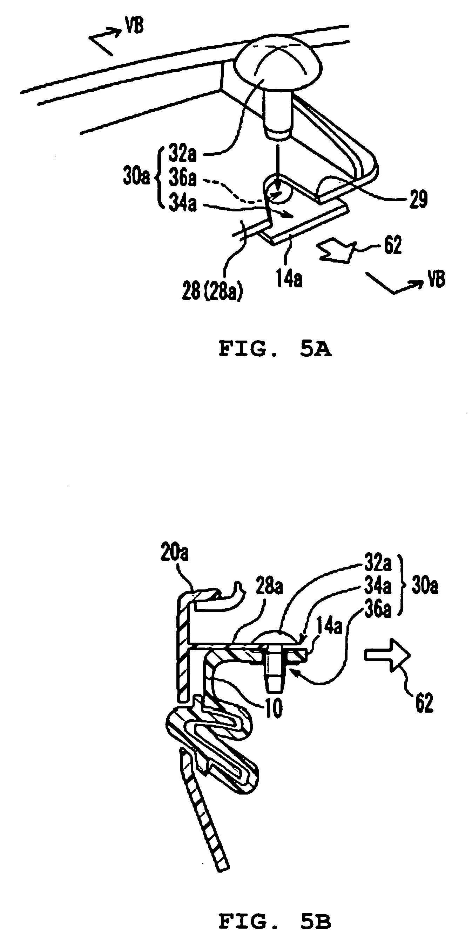

First, a construction for locking the upper second end 14a is shown in FIGs. 5. FIG. 5 (a) is an exploded perspective view of a vicinity of the upper second end 14a in FIG. 3 on larger scale, which shows a state before a screw 32a is tighten for purposes of clarity. FIG. 5 (b) is a cross section taken along line VB-VB showing a state after the screw 32a is tightened in FIG. 5(a).

The locking member 30a for locking the upper second end 14a is constructed in such a manner that a fastening member 32a for fastening the flasher lamp 10 and the cowling 20 together can be inserted in the second end (the upper second end 14a) of the flasher lamp and the mounting part 28a of the cowling. The fastening member 32a of this embodiment is the screw 32a as described above. That is, the upper second end 14a is fastened and fixed to the mounting part 28a by the screw 32a, and thereby the upper second end 14a and the mounting part 28a are locked together in such a manner that a prescribed fastening force (for example, approximately 1.0 N·m) is applied in a direction of the fastening. The flasher lamp is firmly fixed by means of fastening with the screw 32a as described above. Therefore, an effect of preventing oscillations of the flasher lamp can be obtained.

As shown in FIGs. 5(a) and (b), the mounting part 28a of this embodiment is a plate member formed generally in parallel with the rotational direction of the flasher lamp 10 (the direction of the arrow "62"). The screw 32a is inserted in a direction generally perpendicular to the rotational direction of the flasher lamp 10 (the direction of the arrow "62").

An insertion hole 34a in which the fastening member 32a (the screw 32a herein) is inserted is formed on the mounting part 28a of the cowling. The insertion hole 34a is formed with a wall surface 29 in a U-shape opening in the rotational direction of the flasher lamp. That is, the threaded hole 34a opens in a direction in which the flasher lamp 10 is pulled off (the direction of the arrow "62"). A threaded hole36a formed in the upper second end 14a is adapted to receive the screw 32a to be tightened therein. When the flasher lamp 10 is located in a position to protrude from the cowling 20, the holes 34a and 36a become aligned.

The hole 34a opens in the direction in which the flasher lamp 10 is pulled off as described above, and thereby the flasher lamp 10 can be rotated against the fastening force of the screw 32a when a prescribed load is applied in a fall of the vehicle. That is, such a construction having the U-shaped threaded hole enables a specific embodiment of a construction in which the engagement by the locking member 30a can be unlocked.

In the above construction, the fastening force between the flasher lamp and the mounting part is determined corresponding to a degree of fastening by the screw 32a in the hole 36a, and thus a tendency of the flasher lamp to be pulled off depends on tightness of the fastening by the screw 32a. That is, size of the prescribed load is adjustable corresponding to the tightness of the fastening by the screw 32a. For example, in the case that it is required to set the prescribed load large (in other words, to make the flasher lamp be less likely pulled off), the fastening by the screw 32a is made tighter. Conversely, in the case that it is required to set the prescribed load small (that is, to make the flasher lamp be more likely pulled off), the fastening by the screw 32a is made less tight.

For example, it is preferable that the screw be tightened and the prescribed load be set large for a vehicle with a relatively large weight. Thereby, the flasher lamp is not pulled off if the back of a rider contacts with the flasher lamp while he/she is walking and pushing the vehicle. It is preferable that the screw be loosened and the prescribed load be set small for a small vehicle with a relatively small weight (for example, moped type vehicles). The likelihood of damage in a fall of the vehicle is reduced by making the flasher lamp tend to be pulled off easily. Therefore, a flasher lamp with a light weight and lower strength can be adopted.

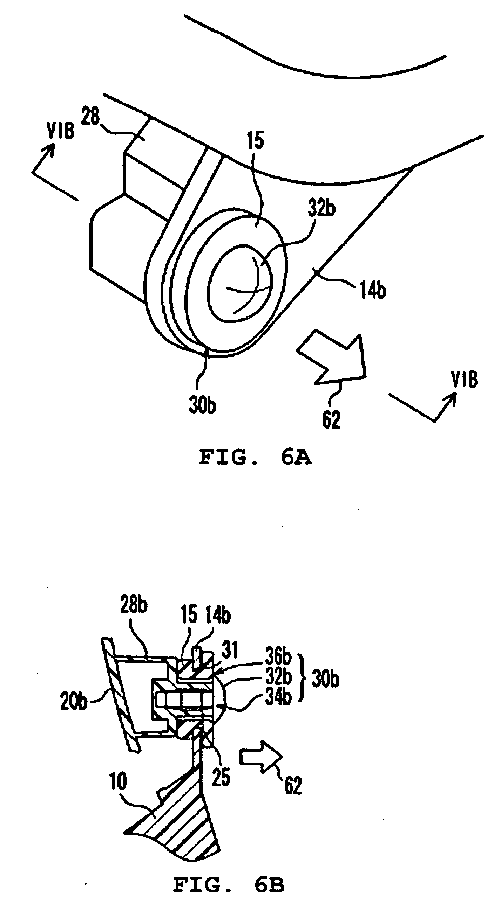

A construction for locking the lower second end 14b is shown in FIGs. 6. FIG. 6(a) is an enlarged external view showing a vicinity of the lower second end 14b in FIG. 3 on larger scale. FIG. 6(b) shows a cross section taken along line VIB-VIB in FIG. 6(a).

As described above, the lower second end 14b is fixed to the mounting part 28b with use of a construction of a locking member 30b different from the upper second end 14a. The locking member 30b for locking the lower second end 14b is constructed in such a manner that a fastening member 32b for fastening the flasher lamp 10 and the cowling 20 together can be inserted in the second end (the lower second end 14b) of the flasher lamp and the mounting part 28b of the cowling. In other words, the lower second end 14b is fastened and fixed to the mounting part 28b (a protruding part 25 of the mounting part 28b exposed on a surface of the lower second end 14b in this embodiment) by a screw 32b. The mounting part 28b has a surface formed generally perpendicularly to the rotational direction of the flasher lamp 10 indicated by the arrow "62" (the direction of the arrow "62"). The screw 32b is tightened in a direction opposite to the rotational direction of the flasher lamp 10 (the direction of the arrow "62").

Differently from the case of the upper second end 14a, a part 15 having an insertion hole 36b in which the fastening member (the screw 32b) is inserted is provided at the second end (the lower second end 14b) of the flasher lamp. The part 15 having the insertion hole 36b is formed with an elastic material (for example, a rubber material). That is, the insertion hole 36b of the lower second end 14b is constructed in an expansible manner. In this embodiment, a rubber grommet 15 having the insertion hole 36b is fitted in an opening 31 of the lower second end 14b, and this is used as the part 15. A diameter of the insertion hole 36b is formed slightly smaller than an outer diameter of a screw head of the screw 32b.

The part 15 having the insertion hole 36b is constructed with an elastic material as described above. Accordingly, the diameter of the insertion hole 36b is expanded when a prescribed load is applied in a fall of the vehicle, and thereby the part 15 moves over the screw head of the screw 32b. As a result, the flasher lamp 10 can be rotated in the direction of the arrow "62". That is, the insertion hole in the flasher lamp is formed in an expansible manner, and this enables a specific embodiment of a construction in which the engagement by the locking member 30b can be unlocked.

Since the unlocking is made while the grommet 15 is squeezing the screw head of the screw 32b with elastic force, a tendency of the flasher lamp to be pulled off can be properly adjusted. Therefore, this can prevent the flasher lamp from accidentally being pulled off in normal traveling except when the vehicle falls down to the ground. The rubber grommet can be used as a vibration damper. For example, friction between the flasher lamp and the cowling due to engine vibration in traveling can be prevented. As a result, generation of abnormal sound (rattling sound, etc.) and abrasion dust can be prevented.

The two second ends (14a and 14b) have the constructions of the locking members (30a and 30b) different from each other in the cases described above. However, locking members of the same construction can be used as long as engagement can be properly unlocked corresponding to a prescribed load. In other words, the locking members of the two second ends (14a and 14b) may be constructed to have U-shaped holes. Differently, each of the second ends (14a and 14b) may be constructed to have the expansible hole.

However, application of a combination of the two constructions, which are the U-shaped hole and the expansible threaded hole, is preferable. Accordingly, the fastening with the screw prevents vibration of the flasher lamp, and elastic force applied by the grommet 15 prevents the flasher lamp from being accidentally pulled off.

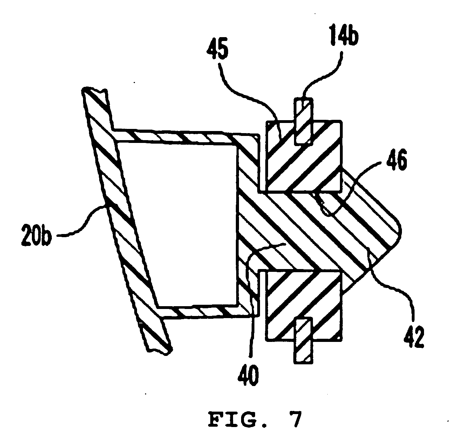

If a screw-fastening can be properly unlocked corresponding to a prescribed load, the construction is not limited to the U-shaped hole and the expansible threaded hole, but another construction of a locking member is applicable. For example, as shown in FIG. 7, the locking member may have a construction such that a protrusion 40 (a lap-shaped or bullet-shaped protrusion) in which a diameter of a tip 42 is increased is unitarily formed on a cowling 20b instead of the screw 32b in FIG. 6(b). A diameter of an insertion hole 46 is expanded when a prescribed load is applied, and an elastic member 45 moves over the tip 42 of the protrusion 40. An effect same as this embodiment can be obtained with such a construction.

Further, descriptions are made about a case that a screw-fastening mechanism is adopted as the locking member in this embodiment. However, damage to the flasher lamp in a fall of the vehicle can be prevented if a locking member has a construction such that engagement is unlocked when a prescribed load is applied from the outside of the flasher lamp. Therefore, the locking member is not limited to the screw-fastening mechanism.

It is required only that the rotational direction of the flasher lamp 10 be a direction (typically in the inward direction of the vehicle) corresponding to a direction of a load applied when the vehicle falls. The rotational direction may be changed according to each kind of vehicle arrangement (for example, a mounting position of the flasher lamp, etc.).

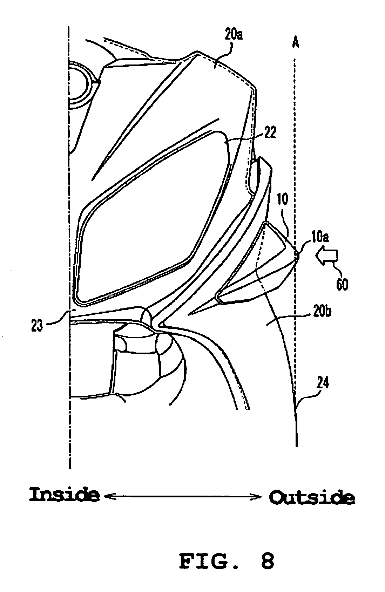

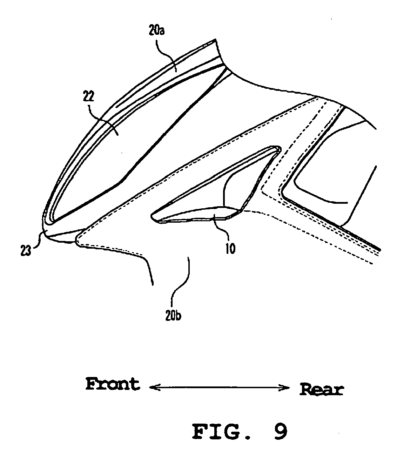

A construction around the cowling 20, more particularly the flasher lamp 10 mounted on the cowling 20 will now be described with reference to FIGs. 8 and 9. FIG. 8 is an enlarged view of essential parts showing a vicinity of a left side of the cowling 20 as seen from the front of the vehicle. FIG. 9 is an enlarged view of essential parts showing a vicinity of the cowling 20 as seen from the left side of the vehicle.

The cowling 20 according to this embodiment is constructed with an upper cowling 20a disposed in the lower front of the handlebars 70 and the lower cowling 20b covering sides of the front fork 73. The upper cowling 20a has a spindle shape in which a center part 23 in the vehicle width direction protrudes furthest forward of the vehicle. The upper cowling 20a has a function for deflecting air flowing from the front of the vehicle in outside directions of the vehicle. A lens surface 22 of a headlight for lighting the front of the vehicle is provided on a front surface of the upper cowling 20a. The lens surface 22 of the headlight has a general parallelogram shape as viewed from the front of the vehicle. The lens surface 22 is constructed to extend upwardly rearward of the vehicle from the center part 23 of the cowling if it is viewed from a side of the vehicle.

The lower cowling 20b is disposed in a lower outside of the lens surface 22. The lower cowling 20b is formed in such a manner that an upper end thereof is positioned higher as progressing from the vehicle front toward the vehicle rear, and is screwed below side surfaces of the upper cowling 20a. The cowling 20 is constructed in the above manner.

The flasher lamps 10 that are turn signal lamps are put on side surfaces of the lower cowling 20b. The flasher lamp 10 according to this embodiment are generally triangular as viewed from a side of the vehicle. The flasher lamp 10 has a ridge-shaped inclined surface protruding outward. A ridgeline of the ridge-shaped inclined surface of the flasher lamp extends obliquely upward as progressing from the vehicle front toward the vehicle rear. The flasher lamp 10 is constructed with a light bulb (not shown), a lamp housing which houses and covers the light bulb, and a lens fixed to the lamp housing. The lamp housing and the lens are made of resin materials, and are formed to protrude further outside of the lower cowling 20b in a state that they are put on.

As shown in FIG. 8, a part of the flasher lamp 10 protrudes more outward than an outermost part 24 of the lower cowling 20b. In other words, the flasher lamp 10 includes a part 10a positioned more outward than vertical line A drawn from the outermost part 24 of the cowling 20. In such a construction, it is highly possible for the flasher lamp 10 to first contact with a road surface, etc. in the case that the straddle type vehicle 100 falls down to the ground for any reason. A load is applied to the flasher lamp 10 in the direction of the arrow "60" (that is, the inward direction of the vehicle) from the outside of the flasher lamp 10 due to an impact in a contact.

The construction of the flasher lamp 10 according to the present invention can be preferably used for a straddle type vehicle including a flasher lamp protruding outside of a cowling as described above. That is, risk of damage to the flasher lamp in a fall of the vehicle is high with the vehicle in which a part of the flasher lamp protrudes more outward than the outermost part of the cowling. However, in the case that the construction of the flasher lamp according to this embodiment is adopted, such risk in a fall can be prevented. Also, an arrangement of the flasher lamp can be determined without being concerned about damage in a fall. Therefore, flexibility in vehicle design can be improved.

The "straddle type vehicle" in this specification is not limited to vehicle types that riders straddle the seats to be seated, but includes vehicle types that riders close both their legs (typically scooter type vehicles). The straddle type vehicle 100 shown in FIG. 1 is an underbone type motorcycle. However, the present invention is not limited to this, but is applicable to a straddle type vehicle including a headlight unit. For example, the present invention is applicable to four-wheeled buggies (ATV: All Terrain Vehicles) and snowmobiles other than underbone type motorcycles.

In the foregoing, the present invention is described with a preferable embodiment. However, the descriptions are not limitations, and various modifications are of course possible.

The present invention can provide a straddle type vehicle in which a flasher lamp can be effectively protected from damage when the vehicle falls down to the ground.
Description of Reference Numerals and Symbol
10: flasher lamp
12: first end
13: pawl
14b: lower second end
14a: upper second end
14: second end
15: part having an insertion hole (grommet)
20: cowling
20a: upper cowling
20b: lower cowling
21: inner surface
22: lens surface
23: center part of cowling
26: bearing
27: hole
28: mounting part
29: wall surface
30: locking member
31: opening
32: screw
34: insertion hole (threaded hole)
36: insertion hole (threaded hole)
70: handlebars
72: front wheel
73: front fork
74: rear wheel
76: seat
100: straddle type vehicle

## Claims

1. A straddle type vehicle (100) comprising:
a cowling (20); and
a flasher lamp (10) adapted to protrude from a surface of the cowling (20), **characterized in that** a first end (12) of said flasher lamp (10) being pivotally supported by a bearing (26) provided on an inner surface (21) of the cowling (20) in a rotatable manner, and a second end (14) of the flasher lamp (10) being locked on a mounting part (28) provided on the inner surface of the cowling (20) by a locking member (30),
wherein the locking member (30) has a construction such that the engagement is unlocked when a prescribed load is applied from an outside of the flasher lamp (10).

2. The straddle type vehicle (100) according to Claim 1, wherein the locking member (30) comprises a fastening member (32).

3. The straddle type vehicle (100) according to Claim 2, wherein the fastening member (32) is adapted to be inserted in the second end (14) of the flasher lamp (10) and the mounting part (30) of the cowling (20) to fasten said flasher lamp (10) and cowling (20) together.

4. The straddle type vehicle (100) according to Claim 2 or 3, wherein the mounting part (30) defines an insertion hole (34) adapted to receive the fastening member (32).

5. The straddle type vehicle (100) according to Claim 4, wherein the insertion hole (34) is formed with a U-shaped wall surface (29) opening toward a rotational direction (62) of the flasher lamp (10).

6. The straddle type vehicle (100) according to any one of Claims 2 to 5, wherein the second end (14) of the flasher lamp comprises a part having an insertion hole (36) adapted to receive the fastening member (32).

7. The straddle type vehicle (100) according to claim 6, wherein the part of the second end (14) of the flasher lamp (10) having the insertion hole (36) comprises an elastic material (15).

8. The straddle type vehicle (100) according to any preceding Claim, wherein the flasher lamp (10) is formed to extend in a fore-and-aft direction of a vehicle (100), and the first end (12) of the flasher lamp (10) pivotally supported by the bearing (26) defines a front end of the flasher lamp (10).

9. The straddle type vehicle (100) according to any preceding Claim, wherein the second end (14) of the flasher lamp is locked on two mounting parts (28a, 28b) provided on the inner surface (21) of the Cowling (20) by locking members (30a, 30b) different from each other, wherein:
a first locking member (30a) between the different locking members (30a, 30b) is constructed in such a manner that a fastening member (32a) for fastening the flasher lamp (10) and the cowling (20) together can be inserted in the second end (14) of the flasher lamp (10) and the mounting part (28a) of the cowling (20);
an insertion hole (34a) in which the fastening member (32a) is inserted is formed on the mounting part (28a) of the cowling (20); and
the insertion hole (34a) defines a U-shape opening toward a rotational direction (62) of the flasher lamp (10).

10. The straddle type vehicle (100) according to Claim 9, wherein:
a second locking member (30b) between the different locking members (30a, 30b) is constructed in such a manner that the fastening member (32b) for fastening the flasher lamp (10) and the cowling (20) together can be inserted in the second end (14) of the flasher lamp (10) and the mounting part (30b) of the cowling (20);
a part having an insertion hole (36b) in which the fastening member (32b) is inserted is provided at the second end (14) of the flasher lamp (10); and
the part having the insertion hole (36b) comprises an elastic material (15).

11. The straddle type vehicle (100) according to any preceding Claim, wherein the flasher lamp (10) comprises a part adapted to protrude outwardly beyond an outermost part of the cowling (20).

## Patentansprüche

1. Grätschsitz-Fahrzeug (100), das aufweist:
ein Verkleidungsblech (20); und
eine Blinkleuchte (10), die so ausgebildet ist, dass sie aus einer Oberfläche des Verkleidungsblechs (20) vorsteht, **dadurch gekennzeichnet, dass** ein erstes Ende (12) der Blinkleuchte (10) drehbar von einem Lager (26) gehalten wird, das auf einer Innenfläche (21) des Verkleidungsblechs (20) in einer drehbaren Weise vorhanden ist, und dass ein zweites Ende (14) der Blinkleuchte (10) an einem Montageteil (28), das auf der Innenfläche des Verkleidungsblechs (20) vorhanden ist, mittels eines Arretierelementes (30) verriegelt wird,
wobei das Arretierelement (30) eine derartige Konstruktion aufweist, dass der Eingriff entriegelt wird, wenn eine vorgeschriebene Belastung von außerhalb der Blinkleuchte (10) zur Anwendung gebracht wird.

2. Grätschsitz-Fahrzeug (100) nach Anspruch 1, bei dem das Arretierelement (30) ein Befestigungselement (32) aufweist.

3. Grätschsitz-Fahrzeug (100) nach Anspruch 2, bei dem das Befestigungselement (32) so ausgebildet ist, dass es in das zweite Ende (14) der Blinkleuchte (10) und das Montageteil (30) des Verkleidungsblechs (20) eingesetzt wird, um die Blinkleuchte (10) und das Verkleidungsblech (20) miteinander zu befestigen.

4. Grätschsitz-Fahrzeug (100) nach Anspruch 2 oder 3, bei dem das Montageteil (30) ein Einsetzloch (34) definiert, das ausgebildet ist, um das Befestigungselement (32) aufzunehmen.

5. Grätschsitz-Fahrzeug (100) nach Anspruch 4, bei dem das Einsetzloch (34) mit einer U-förmigen Öffnung der Wandfläche (29) in Richtung einer Rotationsrichtung (62) der Blinkleuchte (10) ausgebildet ist.

6. Grätschsitz-Fahrzeug (100) nach einem der Ansprüche 2 bis 5, bei dem das zweite Ende (14) der Blinkleuchte ein Teil mit einem Einsetzloch (36) aufweist, der ausgebildet ist, um das Befestigungselement (32) aufzunehmen.

7. Grätschsitz-Fahrzeug (100) nach Anspruch 6, bei dem das Teil des zweiten Endes (14) der Blinkleuchte (10) mit dem Einsetzloch (36) ein elastisches Material (15) aufweist.

8. Grätschsitz-Fahrzeug (100) nach einem der vorhergehenden Ansprüche, bei dem die Blinkleuchte (10) so ausgebildet ist, dass sie sich in einer Längsrichtung eines Fahrzeuges (100) erstreckt, und bei dem das erste Ende (12) der Blinkleuchte (10), das drehbar vom Lager (26) gehalten wird, ein vorderes Ende der Blinkleuchte (10) definiert.

9. Grätschsitz-Fahrzeug (100) nach einem der vorhergehenden Ansprüche, bei dem das zweite Ende (14) der Blinkleuchte an zwei Montageteilen (28a, 28b), die auf der Innenfläche (21) des Verkleidungsblechs (20) vorhanden sind, mittels Arretierelementen (30a, 30b), die voneinander unterschiedlich sind, verriegelt wird, wobei:
ein erstes Verriegelungselement (30a) zwischen den verschiedenen Verriegelungselementen (30a, 30b) in einer derartigen Weise konstruiert ist, dass ein Befestigungselement (32a) für das Befestigen der Blinkleuchte (10) und des Verkleidungsblechs (20) miteinander in das zweite Ende (14) der Blinkleuchte (10) und das Montageteil (28a) des Verkleidungsblechs (20) eingesetzt werden kann;
ein Einsetzloch (34a), in das das Befestigungselement (32a) eingesetzt wird, im Montageteil (28a) des Verkleidungsblechs (20) ausgebildet ist; und
das Einsetzloch (34a) eine U-förmige Öffnung in Richtung einer Rotationsrichtung (62) der Blinkleuchte (10) definiert.

10. Grätschsitz-Fahrzeug (100) nach Anspruch 9, bei dem:
ein zweites Verriegelungselement (30b) zwischen den verschiedenen Verriegelungselementen (30a, 30b) in einer derartigen Weise konstruiert ist, dass das Befestigungselement (32b) für das Befestigen der Blinkleuchte (10) und des Verkleidungsblechs (20) miteinander in das zweite Ende (14) der Blinkleuchte (10) und das Montageteil (30b) des Verkleidungsblechs (20) eingesetzt werden kann;
ein Teil mit einem Einsetzloch (36b), in das das Befestigungselement (32b) eingesetzt wird, am zweiten Ende (14) der Blinkleuchte (10) vorhanden ist; und
das Teil mit dem Einsetzloch (36b) ein elastisches Material (15) aufweist.

11. Grätschsitz-Fahrzeug (100) nach einem der vorhergehenden Ansprüche, bei dem die Blinkleuchte (10) ein Teil aufweist, das so ausgebildet ist, dass es nach außen über einen äußersten Teil des Verkleidungsblechs (20) hinaus vorsteht.

## Revendications

1. Véhicule du type à enfourcher (100), comprenant :
un capot (20) ; et
un clignotant (10), adapté pour déborder d'une surface du capot (20), **caractérisé en ce qu'**une première extrémité (12) dudit clignotant (10) est supportée de manière pivotante par un palier (26) agencé de manière rotative sur une surface interne (21) du capot (20), une deuxième extrémité (14) du clignotant (10) étant verrouillée par un élément de verrouillage (30) sur une partie de montage (28) agencée sur la surface interne du capot (20) ;
l'élément de verrouillage (30) ayant une construction telle que l'engagement est déverrouillé lors de l'application d'une charge prescrite à partir d'un côté externe du clignotant (10).

2. Véhicule du type à enfourcher (100) selon la revendication 1, dans lequel l'élément de verrouillage (30) comprend un élément de fixation (32).

3. Véhicule du type à enfourcher (100) selon la revendication 2, dans lequel l'élément de fixation (32) est adapté pour être inséré dans la deuxième extrémité (14) du clignotant (10) et dans la partie de montage (30) du capot (20) pour assembler ledit clignotant (10) et ledit capot (20).

4. Véhicule du type à enfourcher (100) selon les revendications 2 ou 3, dans lequel la partie de montage (30) définit un trou d'insertion (34) adapté pour recevoir l'élément de fixation (32).

5. Véhicule du type à enfourcher (100) selon la revendication 4, dans lequel le trou d'insertion (34) comporte une surface de paroi en U (29) ouverte vers une direction de rotation (62) du clignotant (10).

6. Véhicule du type à enfourcher (100) selon l'une quelconque des revendications 2 à 5, dans lequel la deuxième extrémité (14) du clignotant comprend une partie comportant un trou d'insertion (36) adapté pour recevoir l'élément de fixation (32).

7. Véhicule du type à enfourcher (100) selon la revendication 6, dans lequel la partie de la deuxième extrémité (14) du clignotant (10) comportant le trou d'insertion (36) comprend un matériau élastique (15).

8. Véhicule du type à enfourcher (100) selon l'une quelconque des revendications précédentes, dans lequel le clignotant (10) est formé de sorte à s'étendre dans une direction allant vers l'avant et vers l'arrière du véhicule (100), la première extrémité (12) du clignotant (10) supportée de manière pivotante par le palier (26) définissant une extrémité avant du clignotant (10).

9. Véhicule du type à enfourcher (100) selon l'une quelconque des revendications précédentes, dans lequel la deuxième extrémité (14) du clignotant est verrouillée sur deux parties de montage (28a, 28b) agencées sur la surface interne (21) du capot (20) par des éléments de verrouillage (30a, 30b) différents les uns des autres, dans lequel :
un premier élément de verrouillage (30a) des éléments de verrouillage différents (30a, 30b) est construit de sorte qu'un élément de fixation (32a), servant à assembler le clignotant (10) et le capot (20), peut être inséré dans la deuxième extrémité (14) du clignotant (10) et dans la partie de montage (28a) du capot (20) ;
un trou d'insertion (34a), dans lequel est inséré l'élément de fixation (32a) est formé sur la partie de montage (28a) du capot (20) ; et
le trou d'insertion (34a) définit une ouverture en U vers une direction de rotation (62) du clignotant (10).

10. Véhicule du type à enfourcher (100) selon la revendication 9, dans lequel :
un deuxième élément de verrouillage (30b) des éléments de verrouillage différents (30a, 30b) est construit de sorte que l'élément de fixation (32b), servant à assembler le clignotant (10) et le capot (20), peut être inséré dans la deuxième extrémité (14) du clignotant (10) et dans la partie de montage (30b) du capot (20) ;
une partie comportant un trou d'insertion (36b), dans lequel l'élément de fixation (32b) est inséré, est agencée au niveau de la deuxième extrémité du clignotant (10) ; et
la partie comportant le trou d'insertion (36b) comprend un matériau élastique.

11. Véhicule du type à enfourcher (100) selon l'une quelconque des revendications précédentes, dans lequel le clignotant (10) comprend une partie adaptée pour déborder vers l'extérieur, au-delà d'une partie externe extrême du capot (20).
